# EUROPÄISCHE PATENTSCHRIFT

(11) **EP 1 929 612 B1**
(45) Veröffentlichungstag und Bekanntmachung des Hinweises auf die Patenterteilung: **11.05.2011**
(21) Anmeldenummer: 06793681.5
(22) Anmeldetag: 20.09.2006
(51) Int. Cl.: H02K 9/28, H02K 15/00

(54) **ELEKTRISCHE MASCHINE UND VERFAHREN ZUM NACHRÜSTEN EINER ELEKTRISCHEN MASCHINE**
ELECTRICAL MACHINE AND METHOD OF RETROFITTING AN ELECTRICAL MACHINE
MACHINE ELECTRIQUE ET PROCEDE POUR AMELIORER UNE MACHINE ELECTRIQUE

(30) Priorität: 27.09.2005 EP 05021078
(43) Veröffentlichungstag der Anmeldung: 11.06.2008
(73) Patentinhaber: SIEMENS AKTIENGESELLSCHAFT, 80333 München (DE)
(72) Erfinder: HÖFEL, Mark, 41469 Neuss (DE); WINKELMANN, Udo, 44879 Bochum (DE)
(86) Internationale Anmeldenummer: PCT/EP2006/066552
(87) Internationale Veröffentlichungsnummer: WO 2007/036471

(56) Entgegenhaltungen:
- WO-A-00/69049
- US-A1- 2003 168 083
- US-A1- 2004 100 159
- PATENT ABSTRACTS OF JAPAN Bd. 1998, Nr. 01, 30. Januar 1998 (1998-01-30) & JP 09 247914 A (HITACHI KIDEN KOGYO LTD), 19. September 1997 (1997-09-19)
- PATENT ABSTRACTS OF JAPAN Bd. 013, Nr. 317 (E-789), 19. Juli 1989 (1989-07-19) & JP 01 085549 A (TOSHIBA CORP; others: 01), 30. März 1989 (1989-03-30)
- PATENT ABSTRACTS OF JAPAN Bd. 005, Nr. 176 (E-081), 12. November 1981 (1981-11-12) & JP 56 103951 A (TOSHIBA CORP), 19. August 1981 (1981-08-19)

## Beschreibung

Die Erfindung betrifft eine elektrische Maschine mit einer Rotorwelle, einem an der Rotorwelle angeordneten Schleifring sowie mindestens zwei entlang des Umfangs des Schleifrings angeordneten Schleifkontakten zum Herstellen einer elektrischen Verbindung mit dem Schleifring. Ferner betrifft die Erfindung ein Verfahren zum Nachrüsten einer elektrischen Maschine mit einer Rotorwelle, einem an der Rotorwelle angeordneten Schleifring sowie mindestens zwei entlang des Umfangs des Schleifrings angeordneten Schleifkontakten zum Herstellen einer elektrischen Verbindung mit dem Schleifring.

Eine elektrische Maschine wandelt mechanische in elektrische Energie oder elektrische in mechanische Energie um. Je nach Einsatz spricht man von Generatorbetrieb (Umwandlung von mechanischer in elektrische Energie) oder von Motorbetrieb (Umwandlung von elektrischer in mechanische Energie). Bei als Generator betriebenen elektrischen Maschinen wird zwischen Gleichstromgeneratoren und Wechselstromgeneratoren unterschieden.

Bei Gleichstromgeneratoren wird bei Drehung einer Rotorwelle in einem Anker des Generators ein elektrischer Gleichstrom erzeugt, der über einen an der Rotorwelle befestigten Schleifring mittels eines Schleifkontakts, wie etwa einer Kohlebürste abgegriffen wird. Bei Wechselstromgeneratoren sind am Ende einer Rotorwelle Schleifringe angebracht. Beim Betrieb des Wechselstromgenerators wird über mittels an den Schleifringen schleifenden Schleifkontakten, wie etwa Kohlebürsten der Erregerwicklung von außen her Strom zugeführt. Die Erregerwicklung erzeugt dabei ein magnetisches Erregerfeld im Bereich einer sie umgebenden Statorwicklung. Bei Drehung des Rotors wird ein Wechselstrom in die Spulenwicklungen des Stators induziert.

Bei elektrischen Maschinen der eingangs genannten Art entsteht durch Abrieb der Schleifkontakte, wie etwa der Kohlebürsten, an den Schleifringen Abrieb; der zu elektrischen Überschlägen an den dort installierten Komponenten führen kann. Durch die dabei entstehenden Lichtbögen kann es zu, massiven Schädigungen an den installierten Komponenten und der Rotorwelle kommen. Bei herkömmlichen elektrischen Maschinen wird dieser Abrieb durch einen Luftstrom, der durch die Drehbewegung der Schleifringe selbst oder durch Lüfter erzeugt wird, im Umfeld der Schleifringe unkontrolliert mitgenommen.

Andere im Stand der Technik bekannte elektrische Maschinen (wie WO 00/69049 oder US 2003/0168083) weisen ringförmig vollständig die Rotorwelle umlaufende Absaugringe auf. Diese Absaugringe sind in axialer Richtung der Rotorwelle zwischen zwei Schleifringabschnitten angeordnet. Die Schleifringe sind dabei mittig in zwei um die gesamte Rotorwelle erstreckende Schleifringabschnitte unterteilt. Da die Schleifkontakte jeweils direkt über den Schleifringabschnitten angeordnet sind, sind die Absaugringe zwischen Schleifkontakten in Axialrichtung der Rotorwelle angeordnet. Die Absaugringe befinden sich somit seitlich versetzt zu den entsprechenden Schleifringen. Diese im Stand der Technik bekannte Absaugeinrichtung erfordert einen erheblichen konstruktiven Aufwand und ermöglicht aufgrund der seitlichen Versetzung der Absaugringe gegenüber der Schleifringoberfläche keine optimale Absaugung.

Eine der Erfindung zugrundeliegende Aufgabe besteht darin, eine elektrische Maschine der eingangs genannten Art sowie ein Verfahren zum Nachrüsten einer elektrischen Maschine der eingangs genannten Art dahingehend zu verbessern, dass eine Ansammlung von Abrieb am Schleifring auf kosteneffiziente Art, insbesondere bei bereits in Verwendung befindlichen elektrischen Maschinen wirksam vermieden werden kann.

Diese Aufgabe ist erfindungsgemäß mit einer gattungsgemäßen elektrischen Maschine gelöst, die eine zwischen den mindestens zwei Schleifkontakten direkt über dem Schleifring angeordnete Absaugeinrichtung zum Absaugen von am Schleifring entstehendem Abrieb aufweist. Darüber hinaus ist die Aufgabe mit einem gattungsgemäßen Verfahren gelöst, welches durch eine Anordnung einer Absaugeinrichtung zum Absaugen von am Schleifring entstehendem Abrieb an einer Position zwischen den mindestens zwei Schleifkontakten direkt über dem Schleifring gekennzeichnet ist.

Erfindungsgemäß ist die Absaugeinrichtung also zwischen den mindestens zwei entlang des Umfangs des Schleifrings angeordneten Schleifkontakten angeordnet. Das heißt, die Absaugeinrichtung befindet sich im Wesentlichen auf einer direkten Verbindungslinie zwischen den Schleifkontakten entlang des Umfangs des Schleifringes. Damit ist die Absaugeinrichtung in einem Zwischenraum zwischen den Schleifkontakten angeordnet und befindet sich damit direkt über der Schleifringoberfläche, d.h. in radialer Richtung des Schleifrings etwas nach außen versetzt. Damit kann die Absaugeinrichtung auf der Schleifringoberfläche befindlichen Abrieb unmittelbar nach dessen Erzeugung absaugen.

Der konstruktive Aufwand der Absaugeinrichtung ist im Vergleich zu der herkömmlichen Ansaugung mittels Absaugringen gering, da die Absaugeinrichtung an bisher ungenützten Zwischenräumen zwischen den Schleifkontakten angeordnet wird. Eine Umkonstruktion der Schleifkontakte ist damit nicht notwendig. Damit eignet sich das erfindungsgemäße Verfahren besonders zum Nachrüsten einer elektrischen Maschine mit einer Absaugeinrichtung. Die bestehenden Bauteile der elektrischen Maschine müssen nicht verändert oder gar ausgetauscht werden. Bei der erfindungsgemäßen elektrischen Maschine wird wirksam eine Ablagerung von Abrieb, insbesondere Kohlenstaub auf der Schleifringoberfläche verhindert. Damit wird aktiv eine Schädigung durch Spannungsüberschläge auf der Grundlage von Kohlenstaub an allen Komponenten im Schleifringbereich verhindert. Weiterhin wird durch die Absaugung auch der Luftaustausch im Bereich des Schleifrings erhöht, wodurch die Schleifringe zusätzlich gekühlt werden. Durch den erhöhten Luftbedarf im Schleifringbereich muss die Luft durch geeignete Filter zugeführt werden. Dadurch wird das Abnutzungsverhalten des Schleifrings und der Schleifkontakte verbessert, wenn der Generator in einer verschmutzen Umgebung steht.

In einer vorteilhaften Ausführungsform weist die elektrische Maschine mindestens einen weiteren an der Rotorwelle angeordneten Schleifring auf, welcher insbesondere auf ein gegenüber dem für den ersten Schleifring vorgesehenen elektrischen Potential unterschiedliches elektrisches Potential ausgelegt ist, wobei die Absaugeinrichtung einen sich quer zur Umfangsrichtung der Schleifringe erstreckenden und einen oder mehrere der Schleifringe überdeckenden Absaugstutzen aufweist. Dem weiteren Schleifring sind vorteilhafterweise mindestens zwei weitere Schleifkontakte zugeordnet. Die jeweiligen Schleifkontakte der weiteren Schleifkontakte sind insbesondere jeweils auf einer Achse mit den entsprechenden ersten Schleifkontakten angeordnet. Diese Achsen sind vorteilhafterweise jeweils parallel zur Achse der Rotorwelle. Der sich parallel zur Rotorachse erstreckende Absaugstutzen ermöglicht aufgrund seiner Überdeckung mehrerer Schleifringe ein besonders effizientes Absaugen von an diesen Schleifringen entstehendem Abrieb. Insbesondere ist diese schleifringübergreifende Absaugung auch bei Schleifringen unterschiedlichen elektrischen Potentials möglich, was die Vielseitigkeit der erfindungsgemäßen Absaugeinrichtung weiter erhöht.

Um eine optimale Absaugwirkung zu erreichen ist es zweckmäßig, wenn zwischen der Absaugeinrichtung und dem Schleifring ein Spalt vorgesehen ist. Dieser Spalt stellt eine radiale Trennung der Absaugeinrichtung von dem Schleifring dar. Insbesondere ist die Spaltbreite derart gewählt, dass die zwischen dem Schleifring und der Absaugeinrichtung angesaugte Luft eine zur Mitnahme des auf dem Schleifring befindlichen Abriebs optimale Strömung erhält. Der Spalt zwischen der erfindungsgemäßen Absaugeinrichtung und dem Schleifring verhindert weiterhin ein Entlangschleifen der Absaugeinrichtung am Schleifring und damit eine Beschädigung der Absaugeinrichtung oder des Schleifrings.

Der einstellbare Spalt sorgt für eine optimale Anpassung der Absaugeinrichtung auch nach Revisionen (lange Betriebszeiten), wenn der Schleifring an der Oberfläche verschlissen ist und abgedreht werden muss, wodurch er einen geringeren Nenndurchmesser erhält.

In zweckmäßiger Ausführungsform weist die Absaugeinrichtung eine radial bezüglich der Rotorwelle ausgerichtete Absaugrichtung auf. Insbesondere weist die Absaugeinrichtung eine in Absaugrichtung ausgerichtete Längsachse auf. Eine derartige Absaugeinrichtung steht damit vorteilhafterweise radial von der Rotorwelle ab. Die gemäß der erfindungsgemäßen Ausführungsform radial zur Rotorwelle ausgerichtete Absaugrichtung ermöglicht eine besonders effiziente Absaugung des am Schleifring entstehenden Abriebs. Der Abrieb wird dabei wie bei einem Staubsauger von oben her von dem Schleifring abgesaugt.

In vorteilhafter Ausführungsform weist die elektrische Maschine mindestens drei entlang des Umfangs des Schleifrings angeordnete Schleifkontakte, sowie mindestens eine weitere Absaugeinrichtung, die gegenüber der ersten Absaugeinrichtung an einem anderen Zwischenraum zwischen einzelnen Schleifkontakten der mindestens zwei Schleifkontakte angeordnet ist, auf. Dabei sind mindestens zwei der Absaugeinrichtungen über ein Rohrleitungssystem mit einer zentralen Absaugleitung verbunden. Durch die Möglichkeit, mindestens zwei der Absaugeinrichtungen über eine zentrale Absaugleitung zu betreiben, kann der Platzbedarf für die in der elektrischen Maschine benötigten Rohrleitungen gering gehalten werden. Die Absaugung geschieht vorzugsweise mittels einer an der zentralen Absaugleitung angekoppelten Unterdruckeinheit. Vorteilhafterweise weist eine erfindungsgemäße elektrische Maschine mehrere, insbesondere zwei entlang des Umfangs des/der Schleifringe angeordnete Absaugeinrichtungsgruppen auf, die jeweils mit zentralen Absaugleitungen verbunden sind.

Vorteilhafterweise ist die elektrische Maschine als elektrischer Generator ausgelegt. Alternativ kann die elektrische Maschine auch als Lichtstrommaschine ausgelegt sein.

In einer vorteilhaften Ausführungsform des erfindungsgemäßen Verfahrens weist die elektrische Maschine mindestens einen weiteren an der Rotorwelle angeordneten Schleifring auf, welcher auf ein gegenüber dem für den ersten Schleifring vorgesehenen elektrischen Potential unterschiedliches elektrisches Potential ausgelegt ist. Weiterhin wird die Absaugeinrichtung mit einem sich quer zur Umfangsrichtung der Schleifringe erstreckenden Absaugstutzen bereitgestellt, wobei der Absaugstutzen derart angeordnet wird, dass er sich quer zur Umfangsrichtung der Schleifringe erstreckt.

Die bezüglich der vorstehend aufgeführten vorteilhaften Ausführungsformen der erfindungsgemäßen elektrischen Maschine angegebenen Merkmale werden entsprechend auf das erfindungsgemäße Verfahren zum Nachrüsten einer elektrischen Maschine übertragen. Die bezüglich der vorteilhaften Ausführungsformen der erfindungsgemäßen elektrischen Maschine vorstehend aufgeführten Vorteile beziehen sich damit auch auf die entsprechenden vorteilhaften Ausführungsformen des erfindungsgemäßen Verfahrens.

Nachfolgend wird ein Ausführungsbeispiel einer als elektrischer Generator ausgeführten elektrischen Maschine anhand der beigefügten schematischen Zeichnungen näher erläutert. Es zeigt:
- Fig. 1: eine perspektivische Ansicht von schräg oben auf ein Ausführungsbeispiel einer erfindungsgemäßen elektrischen Maschine, sowie
- Fig. 2: eine Draufsicht auf die elektrische Maschine gemäß Fig. 1 mit Blickrichtung entlang einer Rotorwelle der elektrischen Maschine.

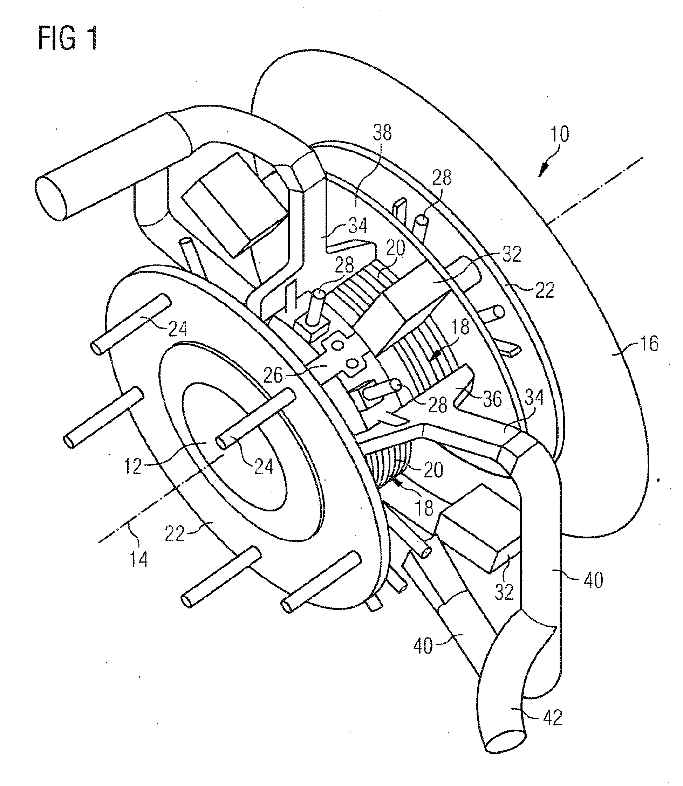

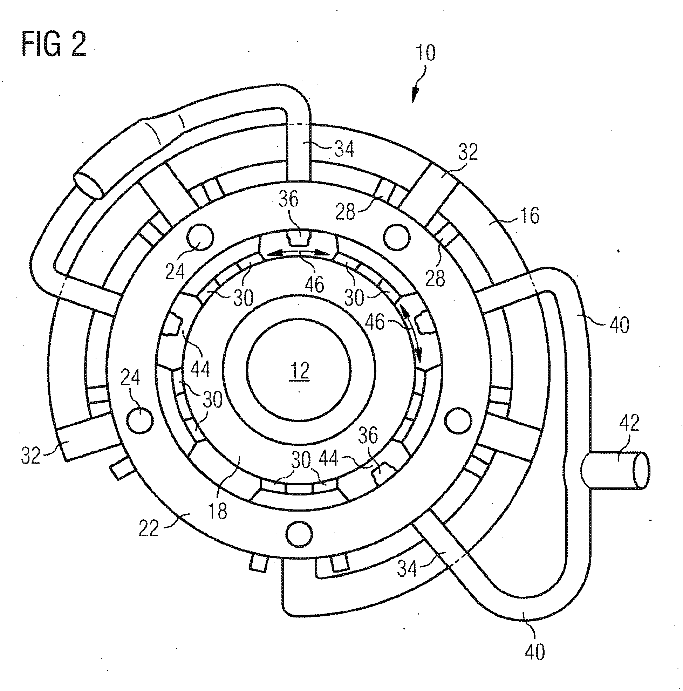

Fig. 1 und 2 zeigen ein erfindungsgemäßes Ausführungsbeispiel eines elektrischen Generators 10 in unterschiedlichen Ansichten. Der elektrische Generator 10 ist insbesondere zur Verwendung in einem thermischen Kraftwerk, wie etwa einem Dampfkraftwerk ausgelegt und weist eine zentral verlaufende Rotorwelle 12 auf. Die Rotorwelle 12 umfasst eine Rotorachse 14 und verläuft durch eine Trägerplatte 16. An der Oberfläche der Rotorwelle 12 sind axial versetzt zwei Schleifringe 18 vorgesehen. Die beiden Schleifringe 18 weisen vorzugsweise unterschiedliche elektrische Potentiale auf. An der jeweiligen Oberfläche der beiden Schleifringe 18 verlaufen axial parallel beabstandete Schleifringrillen 20. Entlang dieser Schleifringrillen 20 schleifen im Betrieb mehrere als Kohlenbürsten ausgebildete Schleifkontakte 30. Die Schleifkontakte 30 sind gleichmäßig entlang des Umfangs des jeweiligen Schleifrings 18 angeordnet. Zwischen den Schleifkontakten ist jeweils ein Zwischenraum 46 vorgesehen. Die Schleifkontakte 30 sind über Steckbürstenhalter 28 und Bürstenhalter 26 an Bürstenbolzen 24 befestigt. Jeder von in der gezeigten Ausführungsform vorgesehenen fünf Bürstenbolzen 24 erstreckt sich durch vordere und hintere Isolierstoffplatten 22 und hält jeweils zwei Schleifkontakte 30, einen für den vorderen und einen für den hinteren Schleifring 18. Zwischen den den jeweiligen Schleifringen 18 zugeordneten Bürstenhaltern 26 befindet sich an jedem Bürstenbolzen 24 ein Halteteil 32.

Zwischen den jeweiligen an einem Bürstenbolzen 24 angeordneten Schleifkontakten 30 ist in Umfangsrichtung jeweils eine Absaugeinrichtung 34 angeordnet. Die jeweilige Absaugeinrichtung 34 weist einen sich über die beiden Schleifringe 18 erstreckenden Absaugstutzen 36 auf. Zwischen dem Absaugstutzen 36 und der Oberfläche des jeweiligen Schleifrings 18 befindet sich ein Spalt 44. Im Generatorbetrieb wird durch die Reibung zwischen den Schleifkontakten 30 und den Schleiringen 18 erzeugter Abrieb, insbesondere Kohlenstaub mittels den entlang des Umfangs der Schleifringe 18 angeordneten Absaugeinrichtungen 34 abgesaugt. Die Absaugeinrichtungen 34 können jeweils paarweise über Einzelsaugleitungen 40 mit einer zentralen Absaugleitung 42 verbunden sein. Die zentralen Absaugleitungen 42 sind wiederum mit einer Unterdruckeinheit zum Erzeugen der Saugwirkung verbunden. Die Absaugeinrichtungen 34 sind an einem um die Rotorwelle 12 herum verlaufenden Haltering 38 befestigt.

## Patentansprüche

1. Elektrische Maschinen (10) mit einer Rotorwelle (12),
einem an der Rotorwelle (12) angeordneten Schleifring (18) sowie mindestens zwei entlang des Umfangs,des Schleifrings (18) angeordneten Schleifkontakten (30) zum Herstellen einer elektrischen Verbindung mit dem Schleifring (18), und eine zwischen den mindestens zwei Schleifkontakten (30) direkt über dem Schleifring (18) angeordnete Absaugeinrichtung (34) zum Absaugen von am Schleifring (18) entstehendem Abrieb,
**gekennzeichnet durch**
mindestens einen weiteren an der Rotorwelle (12) angeordneten Schleifring (18), welcher insbesondere auf ein gegenüber dem für den ersten Schleifring (18) vorgesehenen
elektrischen Potential unterschiedliches elektrisches Potential ausgelegt ist,
wobei die Absaugeinrichtung (34) einen sich quer zur Umfangsrichtung der Schleifringe (18) erstreckenden und mindestens einen oder zwei der Schleifringe (18) überdeckenden Absaugstutzen (36) aufweist.

2. Elektrische Maschine (10) nach Anspruch 1,
**dadurch gekennzeichnet, dass**
zwischen der Absaugeinrichtung (34) und dem Schleifring (18) ein Spalt (44) vorgesehen ist.

3. Elektrische Maschine (10) nach Anspruch 1,
**dadurch gekennzeichnet, dass**
die Absaugeinrichtung (34) eine radial zur Rotorwelle (12) ausgerichtete Absaugrichtung aufweist.

4. Elektrische Maschine (10) nach einem der vorausgehenden Ansprüche,
gekenntzeichnet durch
mindestens drei entlang des Umfangs des Schleifrings (18) angeordnete Schleifkontakte (30),
sowie mindestens eine weitere Absaugeinrichtung (34), die gegenüber der ersten Absaugeinrichtung (34) an einem anderen Zwischenraum (46) zwischen einzelnen Schleifkontakten der mindestens zwei Schleifkontakte (30) angeordnet ist,
.wobei eine oder mehrere der Absaugeinrichtungen (34) über ein-Rohrleitungssystem (40) mit einer zentralen Absaugleitung (42) verbunden sind.

5. Elektrischen Maschine (10) nach einem der vorausgehenden Ansprüche,
**dadurch gekennzeichnet, dass**
die elektrische Maschine (10) als elektrischer Generator (10) ausgelegt ist.

6. Verfahren zum Nachrüsten einer elektrischen Maschine (10) mit einer Rotorwelle (12),
einem an der Rotorwelle (12) angeordneten Schleifring (18) sowie mindestens zwei entlang des Umfangs des Schleifrings (18) angeordneten Schleifkontakten (30) zum Herstellen einer elektrischen Verbindung mit dem Schleifring (18), wobei eine Anordnung einer Absaügeinrichtung (34) zum Absaugen von am Schleifring (18) entstehendem Abrieb an einer Position zwischen den mindestens zwei Schleifkontakten (30) direkt über dem Schleifring (18) vorgesehen wird, **dadurch gekennzeichnet, dass**
die elektrische Maschine (10) mindestens einen weiteren an der Rotorwelle (12) angeordneten Schleifring (18) aufweist, welcher insbesondere auf ein gegenüber dem für den ersten Schleifring (18) vorgesehenen elektrischen Potential unterschiedliches elektrisches Potential ausgelegt ist,
sowie die Absaugeinrichtung (34) mit einem sich quer zur Umfangsrichtung der Schleifringe (18) erstreckenden Absaugstutzen (36) bereitgestellt wird,
wobei der Absaugstutzen (36) derart angeordnet wird, dass er sich quer zur Umfangsrichtung der Schleifringe (18) erstreckt und dabei die mindestens einen oder zwei der Schleifringe (18) überdeckt.

7. Verfahren nach Anspruch 6,
**dadurch gekennzeichnet, dass**
zwischen der Absaugeinrichtung (34) und dem Schleifring (18) ein Spalt (44) vorgesehen ist.

8. Verfahren nach einem der Ansprüche 6 bis 7,
**dadurch gekennzeichnet, dass**
die Absaugeinrichtung (34) in einer radial zur Rotorwelle ausgerichteten Absaugrichtung angeordnet wird.

9. Verfahren nach einem der Ansprüche 6 bis 8,
**gekennzeichnet durch**
mindestens drei entlang des Umfangs des Schleifrings (18) angeordneten Schleifkontakten (30),
wobei mindestens eine weitere Absaugeinrichtung (34) gegenüber der ersten Absaugeinrichtung (34) an einem anderen Zwischenraum zwischen einzelnen Schleifkontakten der mindestens zwei Schleifkontakte (30) angeordnet wird,
wobei eine oder mehrere der Absaugeinrichtungen (34) über ein Rohrleitungssystem (40) mit einer zentralen Absaugleitung (42) verbunden werden.

10. Verfahren nach einem der Ansprüche 6 bis 9,
**dadurch gekennzeichnet, dass**
die elektrische Maschine (10) als elektrischer Generator (10) ausgelegt ist.

## Claims

1. Electrical machine (10) with a rotor shaft (12), a slip ring (18), which is arranged on the rotor shaft (12), and at least two sliding contacts (30), which are arranged along the circumference of the slip ring (18), for producing an electrical connection with the slip ring (18), and a suction device (34), which is arranged between the at least two sliding contacts (30) directly over the slip ring (18), for sucking away abraded material produced on the slip ring (18), **characterized by** at least one further slip ring (18), which is arranged on the rotor shaft (12) and is designed in particular for an electrical potential which is different than the electrical potential provided for the first slip ring (18), the suction device (34) having a suction connection piece (36), which extends transversely with respect to the circumferential direction of the slip rings (18) and covers at least one or two of the slip rings (18).

2. Electrical machine (10) according to Claim 1, **characterized in that** a gap (44) is provided between the suction device (34) and the slip ring (18).

3. Electrical machine (10) according to Claim 1, **characterized in that** the suction device (34) has a suction direction, which is oriented radially with respect to the rotor shaft (12).

4. Electrical machine (10) according to one of the preceding claims, **characterized by** at least three sliding contacts (30), which are arranged along the circumference of the slip ring (18), and at least one further suction device (34), which is arranged opposite the first suction device (34) at another interspace (46) between individual sliding contacts of the at least two sliding contacts (30), one or more of the suction devices (34) being connected to a central suction line (42) via a pipeline system (40).

5. Electrical machine (10) according to one of the preceding claims, **characterized in that** the electrical machine (10) is designed as an electrical generator (10).

6. Method of retrofitting an electrical machine (10) with a rotor shaft (12), a slip ring (18), which is arranged on the rotor shaft (12), and at least two sliding contacts (30), which are arranged along the circumference of the slip ring (18), for producing an electrical connection with the slip ring (18), an arrangement of a suction device (34) for sucking away abraded material produced on the slip ring (18) being provided at a position between the at least two sliding contacts (30) directly over the slip ring (18), **characterized in that** the electrical machine (10) has at least one further slip ring (18), which is arranged on the rotor shaft (12) and is designed in particular for an electrical potential which is different from the electrical potential provided for the first slip ring (18), and the suction device (34) is provided with a suction connection piece (36), which extends transversely with respect to the circumferential direction of the slip rings (18), the suction connection piece (36) being arranged in such a way that it extends transversely with respect to the circumferential direction of the slip rings (18) and in the process covers the at least one or two of the slip rings (18).

7. Method according to Claim 6, **characterized in that** a gap (44) is provided between the suction device (34) and the slip ring (18).

8. Method according to one of Claims 6 to 7, **characterized in that** the suction device (34) is arranged in a suction direction which is oriented radially with respect to the rotor shaft.

9. Method according to one of Claims 6 to 8, **characterized by** at least three sliding contacts (30), which are arranged along the circumference of the slip ring (18), at least one further suction device (34) being arranged opposite the first suction device (34) at a different interspace between individual sliding contacts of the at least two sliding contacts (30), one or more of the suction devices (34) being connected to a central suction line (42) via a pipeline system (40).

10. Method according to one of Claims 6 to 9, **characterized in that** the electrical machine (10) is designed as an electrical generator (10).

## Revendications

1. Machine ( 10 ) électrique ayant un arbre ( 12 ) de rotor, une bague ( 18 ) collectrice montée sur l'arbre ( 12 ) du rotor, ainsi qu'au moins deux contacts (30) glissants, disposés le long du pourtour de la bague ( 18 ) collectrice, pour ménager une liaison électrique avec la bague ( 18 ) collectrice, et un dispositif (34) d'aspiration disposé directement au-dessus de la bague ( 18 ) collectrice entre les au moins deux contacts (30) glissants, pour l'aspiration de matière abrasée se produisant sur la bague ( 18 ) collectrice,
**caractérisée par**
au moins une autre bague ( 18 ) collectrice qui est montée sur l'arbre ( 12 ) du rotor et qui est conçue notamment pour un potentiel électrique différent du potentiel électrique prévu pour la première bague ( 18 ) collectrice,
dans laquelle le dispositif ( 34 ) d'aspiration comporte une tubulure ( 36 ) d'aspiration s'étendant transversalement à la direction du pourtour des bagues ( 18 ) collectrices et recouvrant au moins une ou deux des bagues ( 18 ) collectrices.

2. Machine ( 10 ) électrique suivant la revendication 1,
**caractérisée en ce que**
un intervalle ( 44 ) est prévu entre le dispositif ( 34 ) d'aspiration et la bague ( 18 ) collectrice.

3. Machine ( 10 ) électrique suivant la revendication 1,
**caractérisée en ce que**
le dispositif ( 34 ) d'aspiration a un sens d'aspiration dirigé radialement par rapport à l'arbre ( 12 ) du rotor.

4. Machine ( 10 ) électrique suivant l'une des revendications précédentes, **caractérisée par**
au moins trois contacts ( 30 ) glissants disposés le long du pourtour de la bague ( 18 ) collectrice,
ainsi qu'au moins un autre dispositif ( 34 ) d'aspiration, qui est monté par rapport au premier dispositif ( 34 ) d'aspiration sur un autre espace ( 46 ) intermédiaire entre divers contacts glissants des au moins deux contacts ( 30 ) glissants, dans lequel un ou plusieurs des dispositifs ( 34 ) d'aspiration communiquent avec un conduit (42) central d'aspiration par un système ( 40 ) de tuyauterie.

5. Machine ( 10 ) électrique suivant l'une des revendications précédentes,
**caractérisée en ce que**
la machine (10) électrique est conçue en génératrice ( 10 ) électrique.

6. Procédé pour rééquiper une machine ( 10 ) électrique ayant un arbre ( 12 ) de rotor,
une bague ( 18) collectrice montée sur l'arbre ( 12 ) du rotor, ainsi qu'au moins deux contacts ( 30 ) glissants montés le long du pourtour de la bague ( 18 ) collectrice, pour ménager une liaison électrique avec la bague ( 18 ) collectrice, dans lequel on prévoit directement au-dessus de la bague ( 18 ) collectrice entre les au moins deux contacts ( 30 ) glissants, de mettre un dispositif ( 34 ) d'aspiration pour aspirer de la matière abrasée se produisant sur la bague ( 18 ) collectrice,
**caractérisé en ce que**
la machine (10) électrique comporte au moins une autre bague ( 18) collectrice, qui est montée sur l'arbre ( 12 ) du rotor et qui est conçue notamment pour un potentiel électrique différent du potentiel électrique prévu pour la première bague ( 18 ) collectrice,
tandis qu'on donne au dispositif (34) d'aspiration une tubulure d'aspiration s'étendant transversalement à la direction du pourtour des bagues ( 18 ) collectrices,
la tubulure ( 36 ) d'aspiration étant disposée de manière à s'étendre transversalement à la direction du pourtour des bagues ( 18 ) collectrices et recouvrant au moins une ou deux des bagues ( 18 ) collectrices.

7. Procédé suivant la revendication 6,
**caractérisé en ce que**
on prévoit un intervalle ( 44 ) entre le dispositif ( 34 ) d'aspiration et la bague ( 18 ) collectrice.

8. Procédé suivant l'une des revendications 6 à 7, **caractérisé en ce que**
l'on monte le dispositif (34) d'aspiration dans une direction d'aspiration dirigée radialement par rapport à l'arbre du rotor.

9. Procédé suivant l'une des revendications 6 à 8, **caractérisé par**
au moins trois contacts ( 30 ) glissants disposés le long du pourtour de la bague ( 18 ) collectrice,
dans lequel on monte au moins un autre dispositif ( 34 ) d'aspiration, par rapport au premier dispositif ( 34 ) d'aspiration, sur un autre espace intermédiaire entre divers contacts glissants des au moins deux contacts ( 30 ) glissants,
dans lequel un ou plusieurs des dispositifs ( 34 ) d'aspiration communiquent avec un conduit ( 42 ) central d'aspiration par un système ( 40 ) de tuyauterie.

10. Procédé suivant l'une des revendications 6 à 9,
**caractérisé en ce que**
la machine ( 10 ) électrique est conçue en génératrice ( 10 ) électrique.
